# EUROPÄISCHE PATENTSCHRIFT

(11) **EP 0 980 800 B1**
(45) Veröffentlichungstag und Bekanntmachung des Hinweises auf die Patenterteilung: **25.03.2009**
(21) Anmeldenummer: 99115542.5
(22) Anmeldetag: 02.08.1999
(51) Int. Cl.: B60R 25/00, B60R 25/04, E05B 49/00

(54) **Diebstahlschutzeinrichtung für ein Kraftfahrzeug und Verfahren zum Betreiben der Diebstahlschutzeinrichtung**
Anti-theft protection device for a motor vehicle and method of using such a device
Dispositif de protection anti-vol pour un véhicule automobile et procédé de mise en oeuvre d'un tel dispositif

(30) Priorität: 14.08.1998 DE 19836957
(43) Veröffentlichungstag der Anmeldung: 23.02.2000
(73) Patentinhaber: Continental Automotive GmbH, 30165 Hannover (DE)
(72) Erfinder: Stippler, Michael, 92421 Schwandorf (DE)

(56) Entgegenhaltungen:
- EP-A- 0 492 692
- EP-A- 0 833 026
- WO-A-92/11431
- US-A- 5 742 236

## Beschreibung

Die Erfindung betrifft eine Diebstahlschutzeinrichtung für ein Kraftfahrzeug, mit der Türen ver- oder entriegelt werden oder eine elektronische Wegfahrsperre gelöst wird.

Eine bekannte Diebstahlschutzeinrichtung (DE 43 29 697 C2) weist eine fahrzeugseitige Sende- und Empfangseinheit auf, die Signale senden und empfangen kann. Wenn ein Benutzer in sein Fahrzeug einsteigen möchte, so wird durch Betätigen eines Auslöseschalters ein Frage-Antwort-Dialog ausgelöst. Hierbei wird ein Fragesignal von der Sende- und Empfangseinheit zu einem von dem Benutzer getragenen Codegeber gesendet. Dieser sendet ein verschlüsseltes Antwortsignal automatisch zurück, falls er das Fragesignal zuvor empfangen hat. Im Kraftfahrzeug wird das Antwortsignal mit einem erwarteten Sollsignal verglichen und wenn die beiden übereinstimmen (erfolgreiche Authentifikation), so werden die Türen ver- oder entriegelt.

Bei einer solchen Diebstahlschutzeinrichtung kann es jedoch vorkommen, daß das Antwortsignal von einem Dritten mit einem Aufzeichnungsgerät widerrechtlich aufgezeichnet wird. Wenn nun dieser Dritte den Auslöseschalter betätigt und anschließend das zuvor aufgezeichnete Antwortsignal aussendet, so werden die Türen entriegelt, obwohl er nicht im Besitz des Codegebers ist. Der Unberechtigte kann somit einfach in das Fahrzeug gelangen und dieses auch benutzen.

Eine weitere Diebstahlschutzeinrichtung für ein Kraftfahrzeug ist aus der Anmeldung EP 0 833 026 A bekannt. Sie offenbart eine Diebstahlschutzeinrichtung mit einer Fernsteuereinrichtung in der Form eines tragbaren Codegebers zum Aussenden eines Fernsteuersignals an eine fahrzeugseitige Empfangseinheit zum Empfangen des Femsteuersignals. Das Fernsteuersignal enthält dabei zwei Anteile mit unterschiedlichen Leistungspegeln, wobei das Fahrzeug unterschiedliche Fahrzeugfunktionen ausführt, je nach dem in welcher Beziehung die von der fahrzeugseitigen Empfangseinheit empfangenen Leistungspegel der Anteile des Fernsteuersignals liegen. Es handelt sich hier um ein sogenanntes aktives Zugangs- oder Identifikationssystems, bei dem eine Bedienperson "aktiv" zum Beispiel durch Drücken einer Taste seiner Fernsteuereinrichtung ein Fernsteuersignal an ein Kraftfahrzeug sendet.

Der Erfindung liegt das Problem zugrunde, eine Diebstahlschutzeinrichtung für ein Kraftfahrzeug und ein Verfahren zum Betreiben der Diebstahlschutzeinrichtung zu schaffen, bei denen ein verbesserter Schutz gegen Nachahmung eines Antwortsignals besteht.

Dieses Problem wird erfindungsgemäß durch die Merkmale der Patentansprüche 1 und 5 gelöst.

Dabei sendet eine Sende- und Empfangseinheit ein erstes Anforderungssignal aus, dessen empfangene Leistung im Codegeber gemessen wird. Der gemessene Wert wird im Antwortsignal zurück zur Sende- und Empfangseinheit gesendet. Ebenso wird die Empfangsleistung eines zweiten Anforderungssignals gemessen und im Antwortsignal zurück zur Sende- und Empfangseinheit gesendet. In der Sende- und Empfangseinheit werden die beiden Empfangsleistungen miteinander verglichen und abhängig von diesem Vergleich eine Sicherheitseinrichtung gesteuert.

Vorteilhafter Ausgestaltung der Erfindung sind in den Unteransprüchen angegeben. So kann die Sicherheitseinrichtung eine Zugangskontrolleinrichtung oder eine elektronische Wegfahrsperre (Einrichtung gegen unbefugte Benutzung des Kraftfahrzeugs) sein. Vorteilhaft ist es, wenn die Leistung der Anforderungssignale variiert wird oder die Anforderungssignale über verschiedene Antennen ausgesendet werden.

Ausführungsbeispiele der Erfindung werden im folgenden anhand der schematischen Zeichnung näher erläutert. Es zeigen:
- Figur 1:: ein Blockschaltbild einer erfindungsgemäßen Diebstahlschutzeinrichtung für ein Kraftfahrzeug,
- Figur 2:: ein Blockschaltbild eines tragbaren Codegebers der Diebstahlschutzeinrichtung nach Figur 1, und
- Figuren 3 bis 7:: Ablaufdiagramme zu Verfahren zum Betreiben der Diebstahlschutzeinrichtung nach Figur 1.

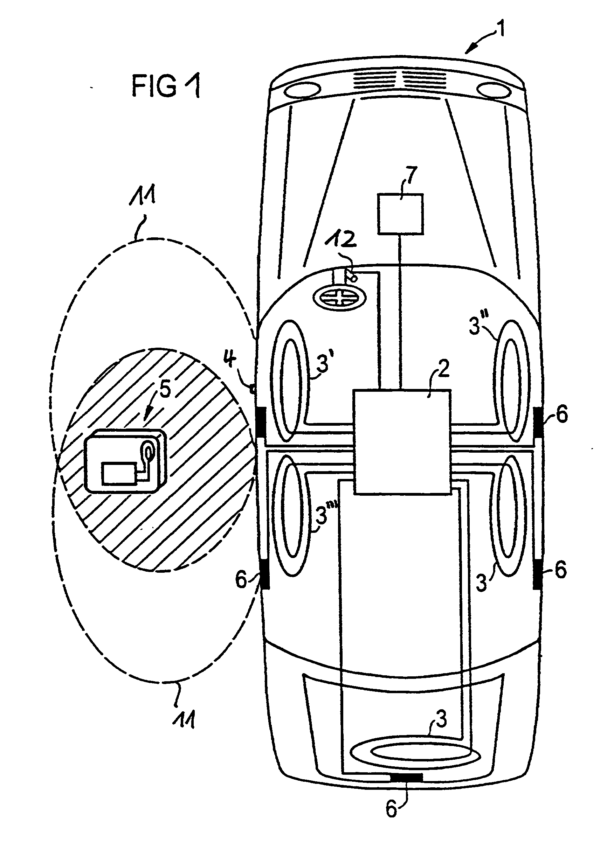

Eine erfindungsgemäße Diebstahlschutzeinrichtung für ein Kraftfahrzeug 1 (Figur 1) weist eine Sende- und Empfangseinheit 2 im Kraftfahrzeug 1 auf. Die Sende- und Empfangseinheit 2 sendet Signale über Antennen 3 (3', 3'', 3''') drahtlos aus, empfängt Signale, wertet diese aus und steuert betreffende Sicherheitseinrichtungen 6, 7 im Kraftfahrzeug 1.

Die Sende- und Empfangseinheit 2 ist mit einer Antenne 3' in der vorderen, fahrerseitigen Seitentür, einer Antenne 3'' in der vorderen, beifahrerseitigen Seitentür, einer Antenne 3''' in der hinteren, fahrerseitigen Seitentür, mit einer Antenne 3 in der anderen Seitentür, mit Antennen 3 am Heck oder im Heckdeckel, im Bereich des Tankverschlusses, im Bereich der Stoßfänger oder an sonstigen Stellen verteilt über die Karosserie des Kraftfahrzeugs 1 verbunden. Über die Antennen 3 wird jeweils ein Fragesignal bei Betätigen eines Auslöseschalters 4, 12 ausgesendet. Falls das Fragesignal von einem tragbaren Codegeber oder Antwortgeber (im folgenden als Transponder 5 bezeichnet) empfangen wird, so sendet dieser ein Antwortsignal zurück.

Das Fragesignal kann auch als Anforderungssignal oder nur als Frage (engl.: challenge) bezeichnet werden. Das Antwortsignal kann auch als Antwort (engl.: response) bezeichnet werden. Durch Empfang der Frage wird automatisch eine Antwort zurückgesendet. Dies wird als Frage-Antwort-Dialog bezeichnet.

Das Antwortsignal wird von einer der Antennen 3 oder einer sonstigen Antenne im Kraftfahrzeug empfangen. Da jede Antenne mit der Sende- und Empfangseinheit 2 verbunden ist, wird das Antwortsignal an die Sende- und Empfangseinheit 2 weitergeleitet und dort ausgewertet.

Die Sende- und Empfangseinheit 2 ist mit Sicherheitseinrichtungen, wie Türschlösser 6 oder betriebsrelevanten Steuergeräten (in denen eine elektronische Wegfahrsperre enthalten ist), wie beispielsweise einer Motorsteuerung 7, im Kraftfahrzeug 1 über Steuer- und Datenleitungen verbunden. Wenn sich der Transponder 5 anhand seines Antwortsignals als berechtigt herausstellt (erfolgreiche Authentifikation), so werden je nach in dem Antwortsignal enthaltener Steuerinformationen ein oder mehrere Türschlösser 6 ver- oder entriegelt oder eine Wegfahrsperre gelöst. Es können zusätzlich auch weitere elektronische Geräte wie Innenlicht, elektrische Fensterheber, elektrisches Schiebedach, Heizung usw. mit dem Antwortsignal gesteuert werden.

Um den Frage-Antwort-Dialog zwischen den Kraftfahrzeug 1 und dem Transponder 5 einzuleiten, muß das Fragesignal zunächst ausgelöst werden. Hierzu kann entweder der Transponder 5 einen nicht dargestellten Auslöseschalter aufweisen, bei dessen Betätigung ein Startsignal zu dem Kraftfahrzeug 1 gesendet wird, woraufhin die Sende- und Empfangseinheit 2 das Fragesignal aussendet. Der Auslöseschalter 4 kann auch außen am Kraftfahrzeug 1 in der Nähe eines Türgriffs vorgesehen sein, bei dessen manueller Betätigung das Fragesignal ausgesendet wird. Ebenso kann ein Näherungsschalter vorgesehen sein, der das Senden des Fragesignals beim Annähern einer Person auslöst.

Für die Erfindung ist es jedoch unwesentlich, wie das Fragesignal ausgelöst wird. Wesentlich hingegen ist, daß infolge des Empfangs des Fragesignals durch den Transponder 5 automatisch ein Antwortsignal zurückgesendet wird.

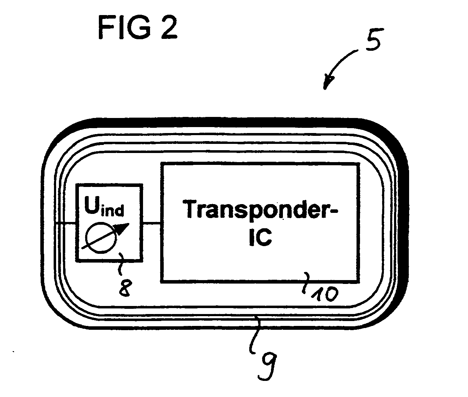

Der Transponder 5 weist erfindungsgemäß eine Meßeinrichtung 8 (Figur 2) auf, mit der die Leistung gemessen wird, mit der das Fragesignal empfangen wird (wird als Empfangsleistung bezeichnet). Die Empfangsleistung ist gleichbedeutend mit der Feldstärke des von einer der Antennen 3 erzeugten (elektro-) magnetischen Felds, die am Ort des Transponders 5 herrscht.

Bei dem vorliegenden Ausführungsbeispiel sind die Antennen 3 im Kraftfahrzeug 1 als Rahmenantennen ausgebildet und erzeugen ein Wechselmagnetfeld, durch das das Fragesignal induktiv übertragen wird. Befindet sich eine Empfängerspule in diesem Magnetfeld, so wird in dieser eine Spannung induziert, wodurch das Fragesignal empfangen wird. Die Höhe der induzierten Spannung hängt im wesentlichen von der Feldstärke und von der Orientierung oder Lage der Spule in Bezug auf die Rahmenantenne ab.

Der Transponder 5 weist eine Empfangsspule 9 auf, in der eine Spannung induziert wird, wenn sich der Transponder 5 innerhalb des Magnetfelds befindet. Je weiter der Transponder 5 von der sendenden Antenne 3 entfernt ist, desto kleiner wird die induzierte Spannung. Die Induktionsspannung kann durch die Meßeinrichtung 8, wie beispielsweise einem Spannungsmesser, gemessen werden. Die gemessene Spannung ist somit ein Maß für die Empfangsleistung.

Die induzierte Spannung kann digital (mit Hilfe eines A/D-Wandlers) oder analog gemessen werden. Der erfaßte Wert wird erfindungsgemäß dem Antwortsignal hinzugefügt. Das Antwortsignal wird in einem Transponder-IC 10 aus geheimen benutzeroder fahrzeugspezifischen Daten durch Codierung oder Verschlüsselung erzeugt. Die Empfangsleistung wird in das Antwortsignal so eingearbeitet, daß es durch Unbefugten nicht einfach zu erkennen und zu entnehmen ist. Das Antwortsignal wird dann moduliert zu der Sende- und Empfangseinheit 2 im Fahrzeug übertragen. Dort wird das Antwortsignal decodiert/entschlüsselt und die darin enthaltenen Codeinformationen ausgewertet. Auf diese Weise wird die Empfangsleistung, d.h. der Wert für die induzierte Spannung aus dem Antwortsignal erhalten. Die Empfangsleistung wird in der Sende- und Empfangseinheit 2 zwischengespeichert.

Damit die Diebstahlschutzeinrichtung sicher genug wird, wird das Fragesignal erfindungsgemäß mehrfach, und zwar mit geänderter Leistung oder über verschiede Antennen 3 ausgesendet. Der Vorgang des Frage-Antwort-Dialogs geht innerhalb von einigen Millisekunden vonstatten. Allerdings wird die Fragesignale zeitlich nacheinander mit dazwischenliegenden, kurzen Pausen ausgesendet. Da sich die Lage/Orientierung und der Ort des Transponders 5 in dieser kurzen Zeit nicht oder nur unwesentlich ändern, ist die gemessene Empfangsleistung eine markante, physikalische Größe, die den Abstand des Transponders 5 zu den Antennen 3 charakterisiert. Daher muß das Fragesignal mit unterschiedlichen Empfangsleistungen empfangen werden, wenn die Sendebedingungen bezüglich Leistung und Abstand Transponder-Antenne geändert werden.

Die Empfangsleistungen werden jeweils zurück zu der Sende-und Empfangseinheit 2 gesendet und dort ausgewertet. Sind die empfangenen Leistungen immer identisch, so ist dies ein Anzeichen dafür, daß das Antwortsignal höchstwahrscheinlich nicht von dem in der Nähe befindlichen Transponder 5 stammt, sondern unbefugt aufgezeichnet und manuell ausgelöst wiedergegeben wurde.

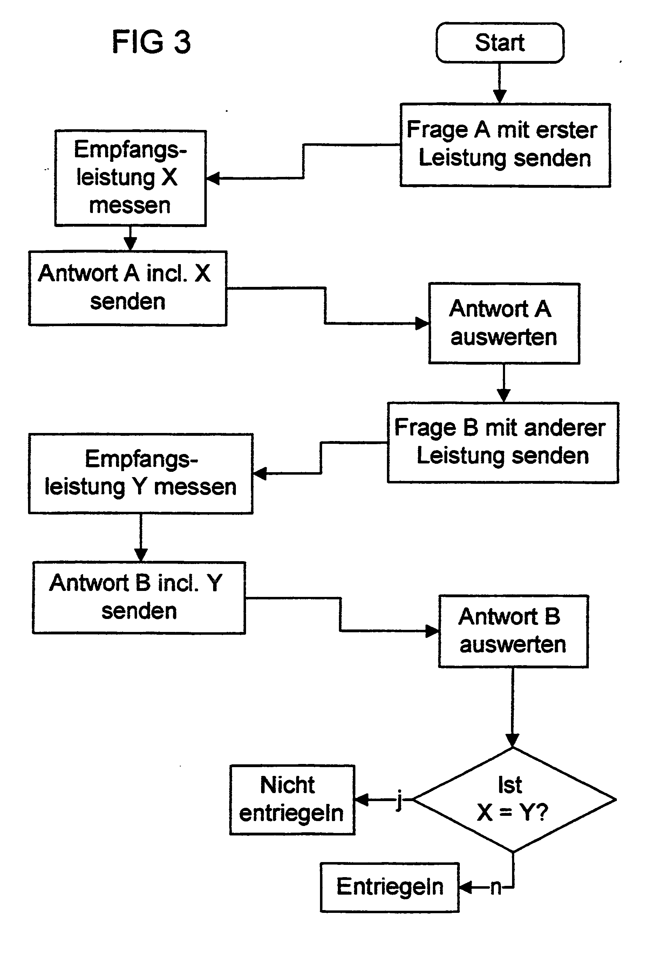

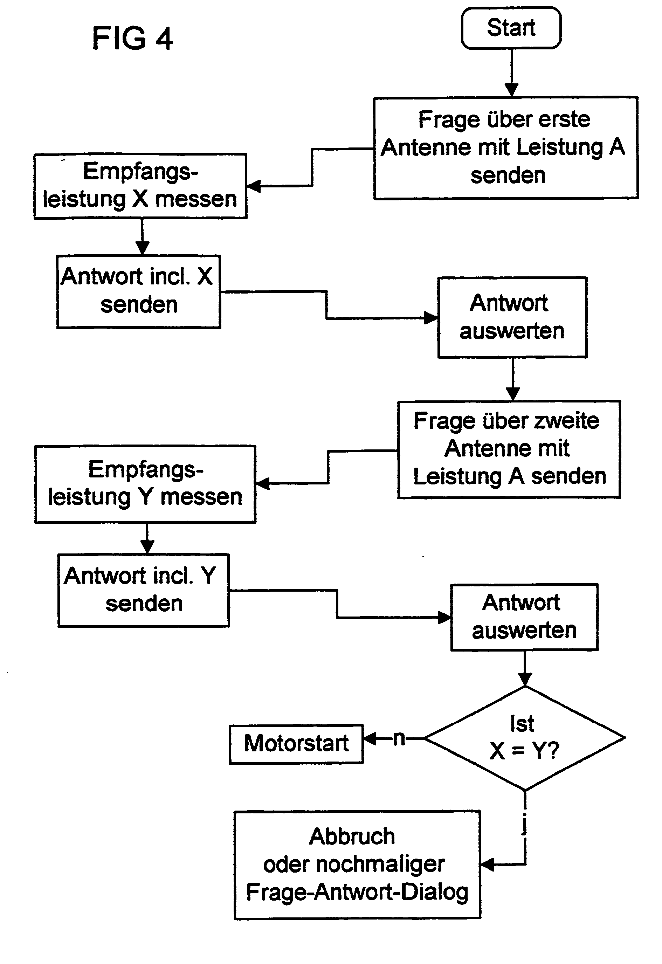

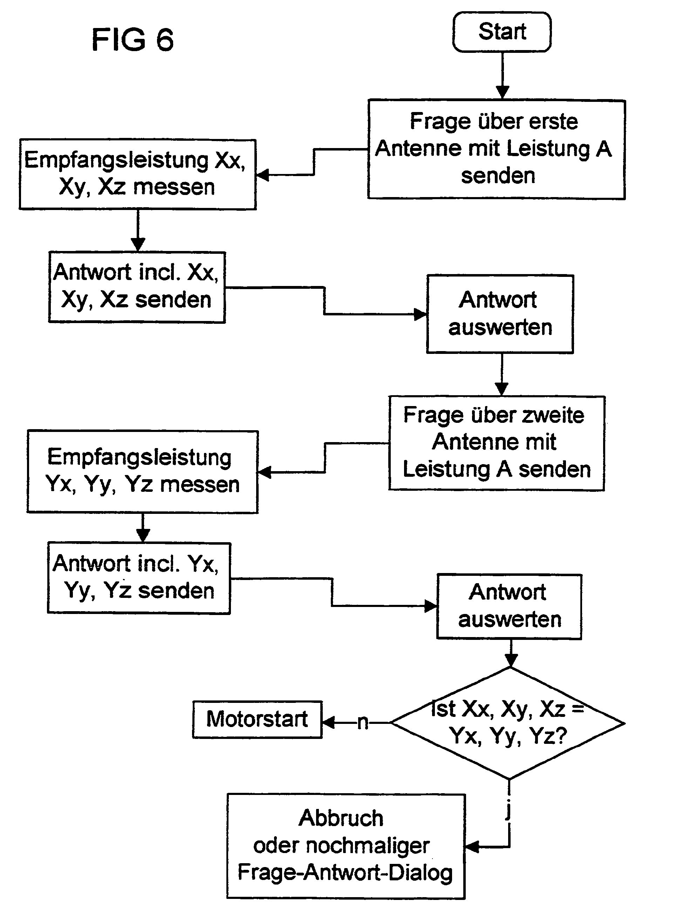

Im folgenden werden im einzelnen Verfahren zum Entriegeln von Türen (Figuren 3, 5 und 7; Zugangskontrolle) und Verfahren zum Motorstart (Figuren 4 und 6; Wegfahrsperre) wiedergegeben. Dabei sind in den Figuren 3 bis 7 die Verfahrensschritte, die im Kraftfahrzeug durchgeführt werden, auf der rechten Seite dargestellt, und diejenigen Verfahrensschritte, die in dem Transponder 5 durchgeführt werden, auf der linken Seite dargestellt.

Wenn der Auslöseschalter 4 betätigt wird, so wird zunächst gemäß Figur 3 eine erste Frage A mit einer ersten Sendeleistung gesendet. Der Transponder 5 empfängt die Frage A mit einer angenommenen Empfangsleistung X. Die Empfangsleistung X hängt vom Abstand des Transponders 5 zu der sendenden Antenne 3 ab. Der Transponder 5 fügt den Wert der Empfangsleistung X seiner Antwort A hinzu und sendet die Antwort A zurück zu der Sende- und Empfangseinheit 2. Dort wird die Antwort A ausgewertet und die Empfangsleistung X der Antwort entnommen.

In einem anschließenden Schritt wird eine zweite Frage B mit einer von der ersten Sendeleistung deutlich verschiedenen Sendeleistung über dieselbe Antenne 3 wie vorher gesendet. Im Transponder 5 wird dann die Empfangsleistung Y gemessen. Der Transponder 5 fügt die Empfangsleistung Y der zweiten Antwort B hinzu und sendet diese zurück zu der Sende- und Empfangseinheit 2. Dort wird die Antwort B ausgewertet und die Empfangsleistung Y daraus entnommen.

Anschließend werden die beiden Empfangsleistungen X und Y miteinander vergleichen. Da üblicherweise davon auszugehen ist, daß in diesem Fall die Empfangsleistungen X und Y unterschiedlich sind, da die Sendeleistungen unterschiedlich waren und der Ort des Transponders 5 sich nicht wesentlich verändert hat, wird nur dann entriegelt, wenn die Empfangsleistungen X und Y tatsächlich deutlich unterschiedlich sind. Es wird jedoch zunächst nicht entriegelt, wenn die Empfangsleistungen etwa gleich sind.

Allerdings wird nur dann entriegelt, wenn auch die in einer oder jeder Antwort A oder B enthaltene Codeinformation mit einer in der Sende- und Empfangseinheit 2 gespeicherten und erweiterten Codeinformation übereinstimmt. Nur durch diese Codeinformation weist der Benutzer mit seinem Transponder 5 seine Berechtigung nach (Authentifikation). Der Vergleich der Empfangsleistungen X und Y stellt lediglich eine zusätzliche Überprüfung der Berechtigung dar.

Statt mit anderer Leistung kann die Frage B auch über eine andere Antenne 3 ausgesendet werden. Wenn - wie in Figur 1 dargestellt - sowohl eine Antenne 3 in der Fahrertür als auch eine Antenne 3 in der fahrerseitigen Hintertür angeordnet ist, so ergeben sich durch jede Antenne 3 jeweils Magnetfelder, deren Reichweite 11 beispielhaft durch gestrichelte Linien dargestellt ist. Die gestrichelten Linien stellen dabei einen Ort gleicher Empfangsleistung dar. Je näher der Transponder 5 zur Antenne 3 kommt, desto größer wird die Empfangsleistung.

Innerhalb des - in der Figur 1 - schraffierten Bereichs überdecken sich die Felder der beiden Antennen 3' und 3'''. In der Mitte dieses schraffierten Bereichs kann es daher vorkommen, daß der Transponder 5 von jeder Antenne 3' und 3''' die gleiche Empfangsleistung empfängt. Außerhalb dieser Mittellinie jedoch, wird von der vorderen 3' und von der hinteren Antenne 3''' jeweils eine unterschiedliche Leistung empfangen. Wenn diese Empfangsleistungen auch deutlich unterschiedlich zu der Sende- und Empfangseinheit 2 zurückgemeldet werden, so können Türen entriegelt werden. Damit die Empfangsleistung einer Antenne 3',3''' klar erfaßt werden kann, werden die Fragesignale zu unterschiedlichen Zeitpunkten nacheinander ausgesendet. Somit werden Fehler durch ein mögliches Überlagerungsfeld vermieden.

In dem Sonderfall, daß der Transponder 5 zufälligerweise genau in der Mitte zwischen den beiden Antennen 3', 3''' angeordnet ist, kann ein nochmaliger Frage-Antwort-Dialog durchgeführt werden, bei dem dann die Sendeleistung einer der beiden Antennen 3', 3''' deutlich verändert wird. Folglich muß sich die dann empfangene Empfangsleistung Z deutlich von den Empfangsleistungen X und Y unterscheiden, so daß dann entriegelt werden kann.

Auf gleiche Weise kann das Verfahren zum Motorstart gemäß Figur 4 durchgeführt werden. Sobald ein Auslöseschalter 12, wie beispielsweise ein Zündstartschalter 12 oder ein Anlaßschalter, betätigt wird, wird eine erste Frage über eine erste Antenne 3 mit einer vorgegebenen Sendeleistung A gesendet. Der Transponder 5, der sich nun im Fahrzeuginneren befindet, mißt eine Empfangsleistung X. Die Empfangsleistung X fügt er seiner Antwort hinzu und sendet diese zurück zu der Sende- und Empfangseinheit 2, die die Antwort auswertet. Anschließend wird eine zweite Frage über eine zweite Antenne 3 mit der gleichen Leistung A ausgesendet. Der Transponder 5 empfängt eine Empfangsleistung Y. Die Empfangsleistung Y fügt er wieder der Antwort hinzu und sendet diese zurück zu der Sende- und Empfangseinheit 2, wo die Antwort ausgewertet wird.

Da der Fahrer den Transponder 5 gewöhnlich bei sich trägt und beim Starten des Fahrzeugs auf dem Fahrersitz Platz genommen hat, ist der Transponder 5 asymmetrisch im Kraftfahrzeug 1 angeordnet (und zwar im Bereich des Fahrersitzes). Wenn die erste Frage über die vordere, fahrerseitige Antenne 3' und die zweite Frage über die vordere, beifahrerseitige Antenne 3'' gesendet wird, so müßten die empfangenen Empfangsleistungen X und Y unterschiedlich sein. Infolgedessen kann die Wegfahrsperre gelöst und der Verbrennungsmotor gestartet werden. Sind die Empfangsleistungen X und Y identisch, so kann das Verfahren abgebrochen werden, da vermutet werden kann, daß die Antworten vorab jeweils von einem unbefugten Benutzer aufgezeichnet und nach Betätigen des Auslöseschalters wiedergegeben wurden.

Sicherheitshalber kann jedoch auch ein nochmaliger Frage-Antwort-Dialog durchgeführt werden, da sich der Transponder 5 zufälligerweise in der Fahrzeugmitte auf der Mittelkonsole befinden könnte. In diesem Fall ist der Transponder 5 gleich weit von den beiden Antennen 3' und 3'' entfernt.

Bei dem nochmaligen Frage-Antwort-Dialog kann die Sendeleistung einer Antenne 3 gegenüber dem vorherigen Frage-Antwort-Dialog deutlich verändert werden. Infolgedessen muß dann eine Empfangsleistung Z empfangen werden, die sich auch klar von den Empfangsleistungen X und Y unterscheidet. Wenn dem so ist, so kann die Wegfahrsperre gelöst werden.

Die Auswerteeinheit der Sende- und Empfangseinheit 2 könnte die Empfangsleistungen X, Y und Z auch darauf prüfen, ob sie gleich oder welche größer und welche kleiner ist als eine andere. Würde die Antwort von einem unbefugten Benutzer durch Wiedergabe eines unberechtigt aufgezeichneten Antwortsignals geschehen, so ist die Empfangsleistung gewöhnlich immer gleich. Falls zufällig Antwortsignale mit unterschiedlichen Sendebedingungen aufgezeichnet würden, so bekommt das Aufzeichnungsgerät dennoch die aktuellen Sendebedingungen nicht mit und weiß daher nicht, ob die Empfangsleistung X größer oder kleiner als Y ist. Dies ist ein zusätzlicher Schutz vor Mißbrauch.

Statt die Sendeleistung zu verändern, kann eine weitere Frage über eine weitere Antenne 3 ausgesendet werden. So kann beim ersten Frage-Antwort-Dialog die erste Frage über die fahrerseitige, vordere Antenne 3 und die zweite Frage über die beifahrerseitige, vordere Antenne 3 ausgesendet werden. Wenn die Empfangsleistungen etwa gleich sind, so kann die dritte Frage über die fahrerseitige, hintere Antenne 3 ausgesendet werden. Falls sich der Transponder 5 auf der Mittelkonsole zwischen dem Fahrer und dem Beifahrersitz befindet, so wird dann die dritte Empfangsleistung Z gemessen, die deutlich kleiner ist als die Empfangsleistungen X und Y. Denn der Transponder 5 ist weiter von der hinteren, fahrerseitigen Antenne 3 entfernt als von der vorderen, fahrerseitigen Antenne 3. Wenn sich die Empfangsleistungen X, Y und Z nicht unterscheiden, so wird der Motor nicht gestartet. Gegebenenfalls kann Alarm ausgelöst werden, wodurch auf einen unbefugten Zutritts- oder Startversuch hingewiesen wird.

Der Transponder 5 kann außer seiner Spule 9 noch zwei weitere Antennen aufwiesen, die jeweils etwa senkrecht zueinander angeordnet sind (sogenannte 3-D-Karte, falls der Transponder 5 auf einer Chipkarte angeordnet ist). Als Antennen können sogenannte Ferritspulen und/oder Luftspulen verwendet werden. Jeder Spule ist eine eigene Eingangsstufe zugeordnet, in der jeweils eine Meßeinrichtung zum Messen der induzierten Spannung angeordnet ist. Somit kann der Transponder 5 die Empfangsleistung in seinen drei räumlichen Komponenten X_{x'} X_{y} und X₂ oder Yₓ, Y_{y}, und Y₂ des magnetischen Felds am Ort des Transponders 5 messen.

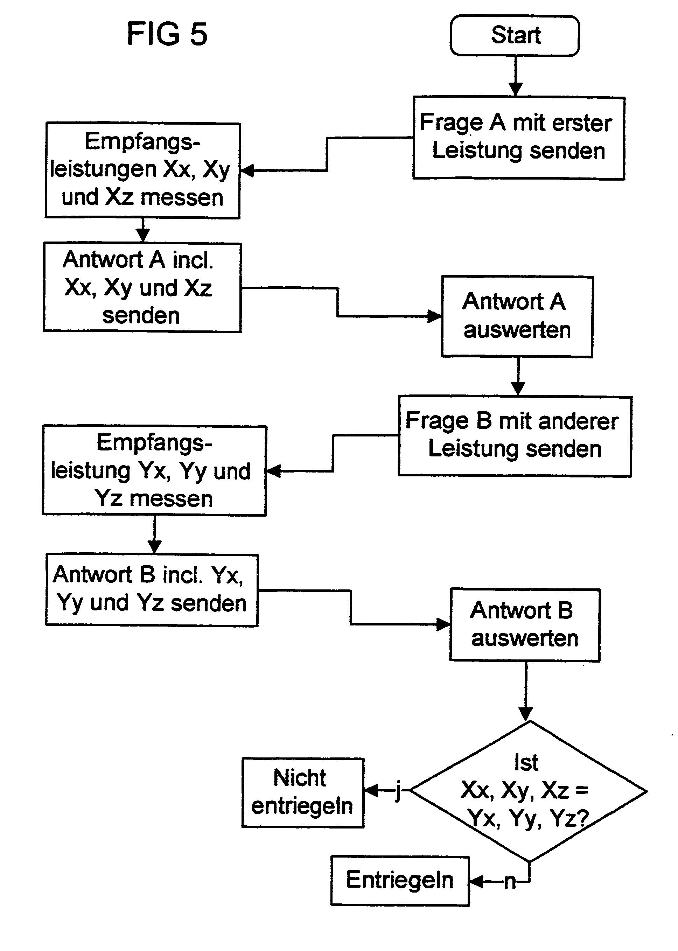

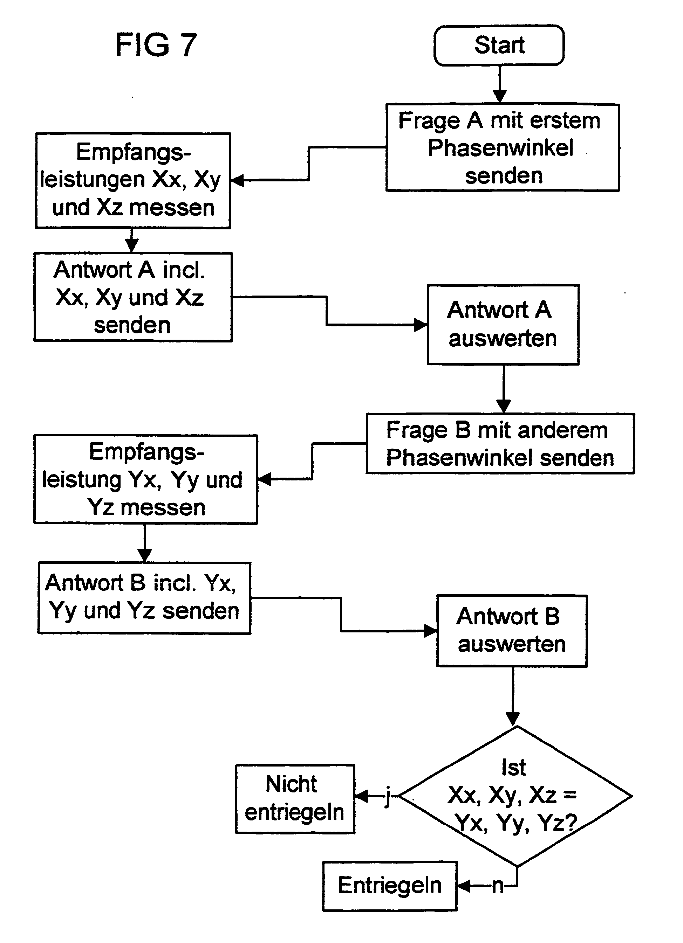

Mit einem solchen Transponder 5 können Verfahren zum Entriegeln von Türen (gemäß der Figuren 5 und 7) oder Verfahren zum Motorstart (gemäß der Figur 6) durchgeführt werden, bei denen jeweils die räumlichen Komponenten der Empfangsleistung (d.h. Xₓ, X_{y} und X_{z} oder Y_{X}, Y_{y} und Y_{z}) gemessen werden und mit den vorherigen verglichen werden. Dabei werden jeweils die einzelnen Komponenten miteinander verglichen oder die Größenverhältnisse aller drei Komponenten zueinander. Die einzelnen Komponenten Xₓ, X_{y} und X_{z} oder Yₓ, Y_{y} und Y_{z} oder die Größenverhältnisse müßten sich dann entsprechend der veränderten Sendeleistung oder eines sendeseitig veränderten Phasenwinkels ändern. Wird keine Änderung gemessen, so kann ein unberechtigter Zugriff auf das Kraftfahrzeug vorliegen.

Statt die Leistung zu ändern (wie in den Figuren 3 und 5 dargestellt) oder die Sendeantenne zu wechseln (wie in den Figuren 4 und 5 dargestellt), kann - wie in Figur 7 dargestellt - das Ändern des Phasenwinkels der ausgesendeten Fragesignale für das Entriegeln von Türen ausgenutzt werden. Der Phasenwinkel kann ebenso für das Verfahren zum Motorstart geändert werden. Durch eine Änderung des Phasenwinkels der ausgesendeten Fragesignale ergeben sich am Ort des Transponders 5 aufgrund der Phasenverschiebung andere Empfangsleistungen, die für das Verfahren ausgenutzt werden, da sich die Empfangsleistung räumlich mit dem Phasenwinkel ändert.

Die Änderung des Phasenwinkels sollte allerdings nicht 180° oder ein ganzzahliges Vielfaches davon sein, da sich ansonsten die Empfangsleistung betragsmäßig nicht von der vorherigen unterscheiden läßt. So kann sich der Phasenwinkel beim zweiten Fragesignal beispielsweise um 45° oder 90° von dem zuvor ausgesendeten ersten Fragesignal unterscheiden, das seinerseits mit einem Phasenwinkel von 0° ausgesendet wurde.

Die Fragesignale werden üblicherweise über Rahmenantennen in den Türen bei einer Frequenz von etwa 125 kHz ausgesendet. Das Antwortsignal kann üblicherweise bei einer Frequenz von 433 MHz zurückgesendet werden. Als Sicherheitseinrichtungen können die Türschlösser 6 oder eine Wegfahrsperre dienen.

Die Türschlösser 6 ver- oder entriegeln die Türen, so daß der Zugang zu dem Kraftfahrzeug 1 verhindert bzw. ermöglicht werden kann. Die Wegfahrsperre kann eine elektronische Schaltung in der ohnehin vorhandenen Motorsteuerung 7 sein, durch die ein Starten und Benutzen des Kraftfahrzeugs 1 nur bei nachgewiesener Berechtigung zugelassen wird. Nur wenn das Antwortsignal anhand seiner in ihm enthaltenen codierten Codeinformation als berechtigt erkannt wird, so wird ein codiertes Freigabesignal erzeugt, durch das die Motorsteuerung 7 aktiviert und der Motor gestartet wird. Statt der Motorsteuerung 7 können auch andere Steuergeräte als Wegfahrsperre dienen. Ebenso kann ein Ein-/Ausschalter im Zündkreis oder ein Sperrventil im Kraftstoffkreis als Wegfahrsperre dienen. Es können auch mehrere Steuergeräte in die Wegfahrsperre eingebunden werden. Jeder Sicherheitseinrichtung gegen unbefugte Benutzung des Kraftfahrzeugs 1 (Wegfahrsperre) wird jedoch nur durch ein codiertes Freigabesignal freigegeben, wenn sich das Antwortsignal als berechtigt herausgestellt hat.

Die Empfangsleistung eines Fragesignals muß nicht in ihrer absoluten Größe gemessen werden. Es genügt, wenn die Empfangsleistung relativ zu der zuvor oder danach gemessenen Empfangsleistung durch Vergleich ermittelt wird. Dabei genügt es festzustellen, ob die Empfangsleistung gleich, größer oder kleiner als eine zuvor gemessene Empfangsleistung ist.

Der Transponder 5 kann - wie in Figur 2 dargestellt - auf einer Chipkarte angeordnet sein. Ebenso kann er auf einem Griff eines herkömmlichen Schlüssels angeordnet sein. Die Formgestaltung des Transponders 5 ist jedoch unwesentlich für die vorliegende Erfindung.

Statt induktiver Übertragung beim Frage-Antwort-Dialog können auch andere Übertragungsarten, wie Funk verwendet werden, solange die Empfangsleistung abhängig vom Abstand Transponder-Antenne ist.

Die Meßeinrichtung 8 kann auch ein Strommesser, ein Leistungsmesser oder ein sonstiges Meßgerät sein, mit dessen Hilfe die Empfangsleistung am Ort des Transponders 5 gemessen werden kann.

## Patentansprüche

1. Diebstahlschutzeinrichtung für ein Kraftfahrzeug mit
- einer fahrzeugseitigen Sende- und Empfangseinheit (2), zum Senden eines Anforderungssignals und zum Empfangen eines Antwortsignals,
- einer Auswerteeinheit in der Sende- und Empfangseinheit (2) zum Auswerten des Antwortsignals und zum Vergleichen einer in dem Antwortsignal enthaltenen Codeinformation mit einer erwarteten Sollcodeinformation sowie zum Steuern von Sicherheitseinrichtungen (6, 7) in Abhängigkeit vom Ergebnis des Vergleichs,
- einem tragbaren Codegeber (5), zum Empfangen des Anforderungssignals und zum Zurücksenden eines codierten Antwortsignals, und
- einer Meßeinrichtung (8) in dem Codegeber (5), der die empfangene Leistung des Anforderungssignals erfaßt und diese Leistung als Wert dem Antwortsignal hinzufügt.

2. Diebstahlschutzeinrichtung nach Anspruch 1, **dadurch gekennzeichnet, daß** die Sicherheitseinrichtung (6, 7) eine Einrichtung (7) gegen unbefugte Benutzung des Kraftfahrzeugs ist.

3. Diebstahlschutzeinrichtung nach einem der vorhergehenden Ansprüche, **dadurch gekennzeichnet, daß** die Sicherheitseinrichtung (6, 7) eine Zugangskontrolleinrichtung (6) ist.

4. Diebstahlschutzeinrichtung nach einem der vorhergehenden Ansprüche, **dadurch gekennzeichnet, daß** der Codegeber (5) ein Spule (9) als Empfangsantenne aufweist und daß die in der Spule beim Empfang des Anforderungssignals induzierte Spannung ein Maß für die Empfangsleistung ist.

5. Verfahren zum Betreiben der Diebstahlschutzeinrichtung nach Anspruch 1, **dadurch gekennzeichnet,**
- **daß** durch die Sende- und Empfangseinheit (2) ein erstes Anforderungssignal ausgesendet wird, dessen Empfangsleistung im Codegeber (5) gemessen wird und im Antwortsignal zur Sende- und Empfangseinheit (2) zurückgesendet wird,
- **daß** durch die Sende- und Empfangseinheit (2) ein zweites Anforderungssignal unter veränderten Bedingungen ausgesendet wird, dessen Empfangsleistung im Codegeber (5) gemessen und im Antwortsignal zur Sende- und Empfangseinheit (2) zurückgesendet wird, und
- **daß** in der Sende- und Empfangseinheit (2) ein Vergleich der ersten Empfangsleistung mit der zweiten Empfangsleistung durchgeführt wird und die Sicherheitseinrichtung (6, 7) in Abhängigkeit vom diesem Vergleich gesteuert wird, sofern eine in dem Antwortsignal enthaltene Codeinformation mit einem erwarteten Sollcodeinformation übereinstimmt.

6. Verfahren nach Anspruch 5, **dadurch gekennzeichnet, daß** das erste Anforderungssignal und das zweite Anforderungssignal mit unterschiedlichen Leistungen ausgesendet werden.

7. Verfahren nach Anspruch 5, **dadurch gekennzeichnet, daß** das erste Anforderungssignal und das zweite Anforderungssignal über unterschiedliche, mit der Sende- und Empfangseinheit (2) verbundene Antennen (3) mit gleicher Leistung ausgesendet werden.

8. Verfahren nach Anspruch 5, **dadurch gekennzeichnet, daß** das erste Anforderungssignal und das zweite Anforderungssignal mit unterschiedlichen Phasenwinkeln ausgesendet werden.

## Claims

1. Anti-theft protection device for a motor vehicle with
- a transmit and receive unit (2) on the vehicle side, for transmitting a request signal and for receiving a response signal,
- an evaluation unit in the transmit and receive unit (2) for evaluating the response signal and for comparing an item of code information contained in the response signal with an expected item of target code information and for controlling safety devices (6, 7) as a function of the result of the comparison
- a portable code emitter (5) for receiving the request signal and for sending back an encoded response signal, and
- a measuring device (8) in the code emitter (5), which records the received output of the request signal and adds this output as a value to the response signal.

2. Anti-theft protection device according to claim 1, **characterised in that** the safety device (6, 7) is a device (7) against unauthorized use of the motor vehicle.

3. Anti-theft protection device according to one of the preceding claims, **characterised in that** the safety device (6, 7) is an access control device (6).

4. Anti-theft protection device according to one of the preceding claims, **characterized in that** the code emitter (5) has a coil (9) as a receiving antenna and that the voltage induced in the coil during receipt of the request signal is a measure for the receiving power.

5. Method for operating the anti-theft protection device according to claim 1, **characterised in that**
- a first request signal is sent by means of the transmit and receive unit (2), the receiving power of which is measured in the code emitter (5) and is sent back in the response signal to the transmit and receive unit (2),
- a second request signal is emitted by the transmit and receive unit (2) subject to changed conditions, the receiving power of which is measured in the code emitter (5) and is sent back to the transmit and receive unit (2) in the response signal, and
- a comparison of the first receiving power with the second receiving power is performed in the transmit and receive unit (2) and the safety device (6, 7) is controlled as a function of this comparison, provided an item of code information contained in the response signal corresponds with an expected item of target code information.

6. Method according to claim 5, **characterised in that** the first request signal and the second request signal are sent with different powers.

7. Method according to claim 5, **characterised in that** the first request signal and the second request signal are sent by way of different antennas (3) connected to the transmit and receive unit (2) with the same power.

8. Method according to claim 5, **characterised in that** the first request signal and the second request signal are sent with different phase angles.

## Revendications

1. Dispositif de protection antivol pour un véhicule automobile, comprenant
- une unité d'émission et de réception (2) portée par le véhicule, destinée à émettre un signal de requête et à recevoir un signal de réponse,
- une unité d'analyse comprise dans l'unité d'émission et de réception (2), destinée à analyser le signal de réponse et à comparer une information de code contenue dans le signal de réponse à une information de code de consigne attendue, ainsi qu'à commander des dispositifs de sécurité (6, 7) en fonction du résultat de la comparaison,
- un émetteur de code portatif (5) destiné à recevoir le signal de requête et à renvoyer un signal de réponse codé, et
- un dispositif de mesure (8) contenu dans l'émetteur de code (5), qui capte la puissance du signal de requête qui est reçue et joint cette puissance au signal de réponse sous la forme d'une valeur.

2. Dispositif de protection antivol selon la revendication 1, **caractérisé en ce que** le dispositif de sécurité (6, 7) est un dispositif (7) contre l'utilisation non autorisée du véhicule automobile.

3. Dispositif de protection antivol selon l'une des revendications précédentes, **caractérisé en ce que** le dispositif de sécurité (6,7) est un dispositif de contrôle de l'accès (6).

4. Dispositif de protection antivol selon l'une des revendications précédentes, **caractérisée en ce que** l'émetteur de code (5) présente une bobine (9) comme antenne de réception, et **en ce que** la tension induite dans la bobine lors de la réception du signal de requête est une mesure pour la puissance de réception.

5. Procédé pour faire fonctionner le dispositif de protection antivol selon la revendication 1, **caractérisée**
- **en ce que** l'unité d'émission et de réception (2) émet un premier signal de requête dont la puissance de réception dans l'émetteur de code (5) est mesurée et renvoyée à l'unité d'émission et de réception (2) dans le signal de réponse,
- **en ce que** l'unité d'émission et de réception (2) émet un deuxième signal de requête dans des conditions modifiées, signal dont la puissance de réception dans l'émetteur de code (5) est mesurée et renvoyée à l'unité d'émission et de réception (2) dans le signal de réponse, et
- **en ce que**, dans l'unité d'émission et de réception (2), effectue une comparaison entre la première puissance de réception et la deuxième puissance de réception, et le dispositif de sécurité (6,7) est commandé en fonction de cette comparaison, dans le cas où une information de code contenue dans le signal de réponse concorde avec une information de code de consigne attendue.

6. Procédé selon la revendication 5, **caractérisé en ce que** le premier signal de requête et le deuxième signal de requête sont émis avec des puissances différentes.

7. Procédé selon la revendication 5, **caractérisé en ce que** le premier signal de requête et le deuxième signal de requête sont émis avec la même puissance par l'intermédiaire de différentes antennes (3) reliées à l'unité d'émission et de réception (2).

8. Procédé selon la revendication 5, **caractérisé en ce que** le premier signal de requête et le deuxième signal de requête sont émis avec des angles de phase différents.
